# EUROPÄISCHE PATENTSCHRIFT

(11) **EP 1 476 675 B1**
(45) Veröffentlichungstag und Bekanntmachung des Hinweises auf die Patenterteilung: **23.08.2006**
(21) Anmeldenummer: 03742512.1
(22) Anmeldetag: 07.02.2003
(51) Int. Cl.: F16F 13/26

(54) **HYDRAULISCH D MPFENDES LAGER**
HYDRAULICALLY DAMPING BEARING
PALIER D'AMORTISSEMENT HYDRAULIQUE

(30) Priorität: 19.02.2002 DE 10206927
(43) Veröffentlichungstag der Anmeldung: 17.11.2004
(73) Patentinhaber: Trelleborg Automotive Technical Centre GmbH, 56203 Höhr-Grenzhausen (DE)
(72) Erfinder: GRAEVE, Arndt, 56068 Koblenz (DE); GRIES, Jürgen, 56203 Höhr-Grenzhausen (DE)
(74) Vertreter: Preissner, Nicolaus
(86) Internationale Anmeldenummer: PCT/EP2003/001250
(87) Internationale Veröffentlichungsnummer: WO 2003/071156

(56) Entgegenhaltungen:
- US-A- 5 911 412
- PATENT ABSTRACTS OF JAPAN vol. 1996, no. 07, 31. Juli 1996 (1996-07-31) & JP 08 080751 A (NIPPONDENSO CO LTD), 26. März 1996 (1996-03-26)
- PATENT ABSTRACTS OF JAPAN vol. 1999, no. 05, 31. Mai 1999 (1999-05-31) & JP 11 051109 A (NOK MEGURASUTIKKU KK), 23. Februar 1999 (1999-02-23)
- PATENT ABSTRACTS OF JAPAN vol. 1997, no. 12, 25. Dezember 1997 (1997-12-25) & JP 09 222148 A (NOK MEGURASUTIKKU KK), 26. August 1997 (1997-08-26)

## Beschreibung

Die Erfindung betrifft eine hydraulisch dämpfendes Lager mit einer Arbeitskammer und einer Ausgleichskammer, die mit einer hydraulisch dämpfenden Flüssigkeit gefüllt und durch eine Zwischenplatte voneinander getrennt sind, wobei die Arbeitskammer und die Ausgleichskammer durch einen Überströmkanal und einen Bypaßkanal miteinander verbunden sind, der durch ein elektromagnetisch in Axialrichtung betätigbares Stellglied freigebbar und verschließbar.

Ein derartiges Lager, das als Motorlager bei Kraftfahrzeugen zum Einsatz kommt, ist aus der US 5,601,280 bekannt. Das Lager weist eine von einer Tragfeder aus elastomerem Material begrenzte Arbeitskammer auf, die durch eine Zwischenplatte von einer Ausgleichskammer getrennt ist, in der ein Überströmkanal und ein Bypaßkanal eingebracht sind, die jeweils in Axialrichtung verlaufen. Die Arbeitskammer und die Ausgleichskammer sind mit einer hydraulischen Flüssigkeit gefüllt. Dem Bypaßkanal ist ein ansteuerbares Stellglied zugeordnet, das ein in der Arbeitskammer angeordnetes Schaltventil aufweist. Über einen Stößel ist das Schaltventil mit einer elektromagnetischen Steuereinrichtung verbunden, die außerhalb des Gehäuses angeordnet ist, das die flüssigkeitsgefüllten Kammern umgibt. Durch die Anordnung des Schaltventils in der Arbeitskammer arbeitet das Stellglied gegen den hydraulischen Druck der Arbeitskammer. Hierdurch sind relativ hohe Stellkräfte erforderlich. Weiterhin macht die Anordnung der elektromagnetischen Steuereinrichtung außerhalb des Gehäuses eine Abdichtung des Ventilstößels erforderlich und führt weiterhin zu einem erhöhten Raumbedarf.

Aus der DE 196 52 502 C2 ist ein weiteres hydraulisch dämpfendes Lager bekannt, bei dem der Bypaßkanal mit einem stempelförmigen Stellglied freigebbar und verschließbar ist. Das Stellglied ist pneumatisch ansteuerbar, wofür ein eine die Ausgleichskammer umgebende Luftkammer vorgesehen ist. Auch hier arbeitet das Stellglied gegen den hydraulischen Druck in der Arbeitskammer.

Der Erfindung liegt die Aufgabe zugrunde ein hydraulisch dämpfendes Lager der eingangs genannten Art derart weiterzubilden, daß bei kompakter Bauweise nur geringe Stellkräfte erforderlich sind.

Zur Lösung dieser Aufgabe wird bei einem hydraulisch dämpfenden Lager der eingangs genannten Art vorgeschlagen, daß das Stellglied als hohlzylinderförmige Schiebehülse ausgebildet ist, die den Bypaßkanal begrenzt und an ihrer Außenseite einen radial abragenden, in der Ausgleichskammer aufgenommenen Anker aufweist, der einerseits mit einer in der Zwischenplatte aufgenommenen elektromagnetischen Spule und andererseits mit einer den Bypaßkanal freigebenden oder verschließenden Prallplatte zusammenwirkt.

Bei dem erfindungsgemäßen Lager sind nur geringe Stellkräfte erforderlich, da das in der Zwischenplatte aufgenommene Stellglied einen in der Ausgleichskammer aufgenommenen als Schaltventil wirkenden Anker aufweist, wodurch dieser nicht gegen den Druck der Arbeitskammer arbeiten muß. Weiterhin zeichnet sich das erfindungsgemäße Lager durch eine sehr kompakte Bauweise aus, da das gesamte elektromagnetische System innerhalb des Lagergehäuses untergebracht ist. Hierbei ist die elektromagnetische Spule, die das Stellglied betätigt, in der Zwischenplatte aufgenommen. Durch diese Bauweise ist auch eine Abdichtung des Stellglieds gegenüber dem Gehäuse entbehrlich. Weiterhin kann die auftretende Verlustwärme an die hydraulische Flüssigkeit abgegeben werden.

Im eingebauten Zustand ermöglicht das dem Bypaßkanal zugeordnete ansteuerbare Stellglied eine vom Betriebszustand abhängige Steuerung der Steifigkeit. So wird der Bypaßkanal vorteilhaft im Leerlauf des abzustützenden Motors geöffnet, wodurch eine Absenkung der Steifigkeit bewirkt wird. Im Fahrbetrieb ist demgegenüber der Bypaßkanal geschlossen.

Vorteilhafte Ausgestaltungen der Erfindung ergeben sich aus den Unteransprüchen.

Vorteilhaft ist dem Stellglied eine Rückstellfeder zugeordnet. Hierdurch wird erreicht, daß das Stellglied bei einem Spannungsabfall in die Ausgangslage zurückgesetzt wird.

Nach einer vorteilhaften Weiterbildung ist die Rückstellfeder spiralförmig ausgebildet und am Innenumfang der Stellglieds festgelegt. Dies wird vorteilhaft dadurch erreicht, daß am Innenumfang des hohlzylinderförmigen Stellglieds eine die Rückstellfeder abstützender Absatz eingebracht ist. Stirnseitig stützt sich die Rückstellfeder an der Zwischenplatte ab.

In vorteilhafter Ausgestaltung weist der Anker des Stellglieds einer Steuerkonus auf, der am Hubanfang die Stellkraft wesentlich erhöht.

Um die auftretenden Reibkräfte zu reduzieren weist das Stellglied eine hohlzylinderförmige Gleithülse aus einem nicht magnetischen Material, vorzugsweise aus Kunststoff, auf.

Vorteilhaft weist die Prallplatte in Umfangsrichtung versetzt angeordnete Stege auf, die an der Zwischenplatte festgelegt sind. Im angesteuerten Zustand des Stellglieds wird der Anker von der Prallplatte entfernt, wodurch der Bypaßkanal mit der Ausgleichskammer flüssigkeitsleitend verbunden wird.

In vorteilhafter Ausgestaltung ist in der Zwischenplatte eine Entkopplungsmembran angeordnet, die von der hydraulischen Flüssigkeit der Arbeitskammer beaufschlagt ist. Eine derartige Entkopplungsmembran, die prinzipiell bei hydraulisch dämpfenden Lagern bekannt ist, verhindert bei hohen Frequenzen und kleinen Amplituden ein Überströmen der Flüssigkeit durch den Überströmkanal und somit eine hydraulische Dämpfung.

Bei einer vorteilhaften Ausgestaltung ist der Freiweg der Entkopplungsmembran durch die elektromagnetische Spule steuerbar.

In vorteilhafter Weiterbildung besteht die Entkopplungsmembran aus einem elastomeren Material und weist ein Einlegeteil aus einem magnetisierbaren Material auf. Bei einer Ansteuerung der elektromagnetischen Spule kann hierdurch der Freiweg der Entkopplungsmembran beschränkt werden.

In vorteilhafter Ausgestaltung ist die Entkopplungsmembran ringförmig ausgebildet.

Nachfolgend wird die Erfindung an Hand von Ausführungsbeispielen näher erläutert, die in der Zeichnung in schematischer Weise dargestellt sind. Hierbei zeigen:
- Fig. 1: einen Vertikalschnitt durch eine erste Ausführungsform eines erfindungsgemäßen Lagers, und
- Fig. 2: einen Vertikalschnitt durch eine zweite Ausführungsform eines erfindungsgemäßen Lagers.

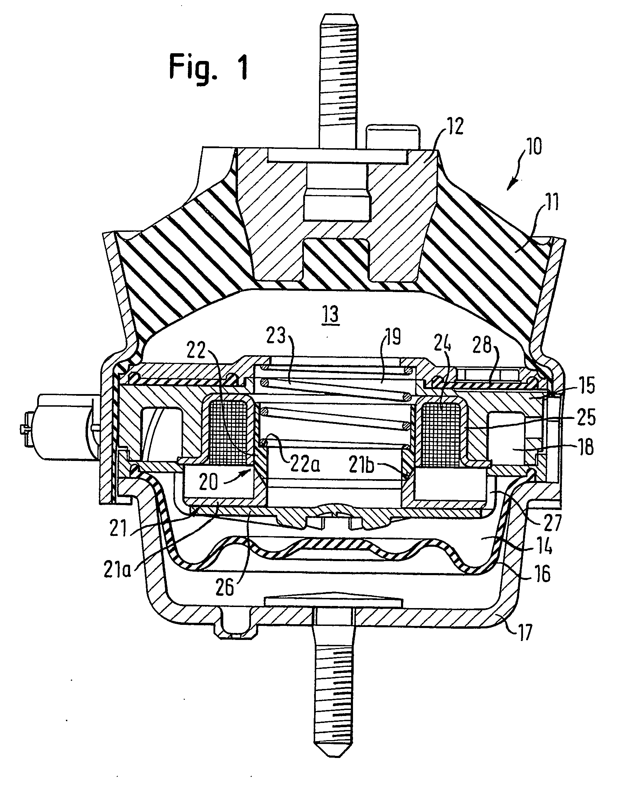

Fig. 1 zeigt ein hydraulisch dämpfendes Lager 10, das als Motorlager bei Kraftfahrzeugen zum Einsatz kommt. Das Lager 10 weist eine Tragfeder 11 aus elastomerem Material auf, die einen motorseitigen Lagerkern 12 abstützt. Die Tragfeder 11 stützt sich randseitig an einem Gehäuse 17 ab, das das Lager am Außenumfang begrenzt.

Die Tragfeder 11 begrenzt eine Arbeitskammer 13, die von einer Ausgleichskammer 14 durch eine Zwischenplatte 15 getrennt ist. Die Ausgleichskammer 14 wird von einer nachgiebigen Ausgleichskappe 16 aus einem elastomerem Material begrenzt.

Die Arbeitskammer 13 und die Ausgleichskammer 14 sind mit einer hydraulischen Flüssigkeit gefüllt. In der Zwischenplatte 15 ist ein die Arbeitskammer 13 und die Ausgleichskammer 14 verbindender Überströmkanal 18 vorgesehen, der spiralförmig verläuft. Weiterhin ist die Arbeitskammer 13 und die Ausgleichskammer 14 durch einen in Axialrichtung verlaufenden im Zentrum der Zwischenplatte 15 angeordneten Bypaßkanal 19 verbunden.

Dem Bypaßkanal 19 ist ein ansteuerbares Stellglied 20 zugeordnet, wodurch der Bypaßkanal 19 freigebbar und verschließbar ist. Das Stellglied 20 ist hohlzylinderförmig ausgebildet und begrenzt den Bypaßkanal 19 randseitig. Das Stellglied 20 wirkt stirnseitig mit einer Prallplatte 26 zusammen, die in der Arbeitskammer 14 angeordnet ist und über am Außenumfang der Prallplatte 26 versetzt angeordnete Stege 27 an der Unterseite der Zwischenplatte 15 festgelegt ist.

Das Stellglied 20 weist einen Anker 21 aus magnetisierbarem Material auf, der mit einem ringförmigen horizontal ausgerichteten Bereich 21a ausgebildet ist. In der Schließstellung des Stellglieds 20 liegt der Bereich 21a des Ankers 21 an der Innenseite der Prallplatte 26 an und verschließt den Bypaßkanal. Um am Hubanfang die Stellkraft zu erhöhen weist der Anker 21 weiterhin einen Steuerkonus 21b auf. An dem Steuerkonus 21b ist formschlüssig eine Gleithülse 22 aus nicht magnetisierbarem Kunststoff festgelegt. Hierdurch wird eine reibungsfreie Führung des Stellglieds am Innenumfang des Bypaßkanals 19 erreicht. An einem Absatz 22a der Gleithülse 22 stützt sich eine spiralförmige Rückstellfeder 23 ab, die stirnseitig an der Zwischenplatte 15 anliegt.

In der Zwischenplatte 15 ist eine elektromagnetische Spule 24 aufgenommen, die von einen näherungsweise U-förmigen Joch 25 umgeben ist. Die elektromagnetische Spule 24 wirkt mit dem Anker 21 des Stellglieds 20 zusammen.

Im Bereich der Arbeitskammer 13 ist an der Zwischenplatte 15 eine Entkopplungsmembran 28 angeordnet, die ringförmig ausgebildet ist und von der Flüssigkeit der Arbeitskammer beaufschlagt ist.

Nachfolgend soll die Funktionsweise des Lagers 10 erläutert werden.

Im dargestellten Schließzustand des Stellglieds 20, der durch die Rückstellfeder 23 bewirkt wird, liegt der Anker 21 des Stellglieds 20 an der Prallplatte an und verschließt den Bypaßkanal 19. In der Schließstellung des Bypaßkanals 19 liegt eine höhere Steifigkeit vor, wie dies beispielsweise im Fahrbetrieb gewünscht wird.

Eine Reduzierung der Steifigkeit, wie sie beispielsweise im Leerlaufbetrieb gewünscht wird, wird durch Öffnung des Bypaßkanals 19 erzielt. Hierzu wird die elektromagnetische Spule 24 angesteuert, wodurch das Stellglied 20 in Axialrichtung gegen die Rückstellfeder 23 versetzt wird. Da der Anker 21 in der Ausgleichskammer 14 angeordnet ist, sind nur relativ geringe Stellkräfte erforderlich. Weiterhin reduziert die am Stellglied 20 vorgesehene Gleithülse 22 die auftretenden Reibkräfte. Der Steuerkonus 21 b, der am Anker 21 vorgesehen ist, bewirkt eine Erhöhung der Stellkraft am Hubanfang.

Da das gesamte elektromagnetische System, das heißt der Anker 21 und die elektromagnetische Spule 24 innerhalb des Lagergehäuses 17 angeordnet sind, zeichnet sich das Lager 10 durch eine sehr kompakte Bauweise aus. Darüber hinaus kann eine Abdichtung des Stellglieds 20 gegenüber dem Lagergehäuse 17 entfallen, da das Stellglied 20 innerhalb des Lagergehäuses 17 angeordnet ist. Des weiteren kann entstehende Verlustwärme des Aktors 21 an die hydraulische Flüssigkeit abgegeben werden.

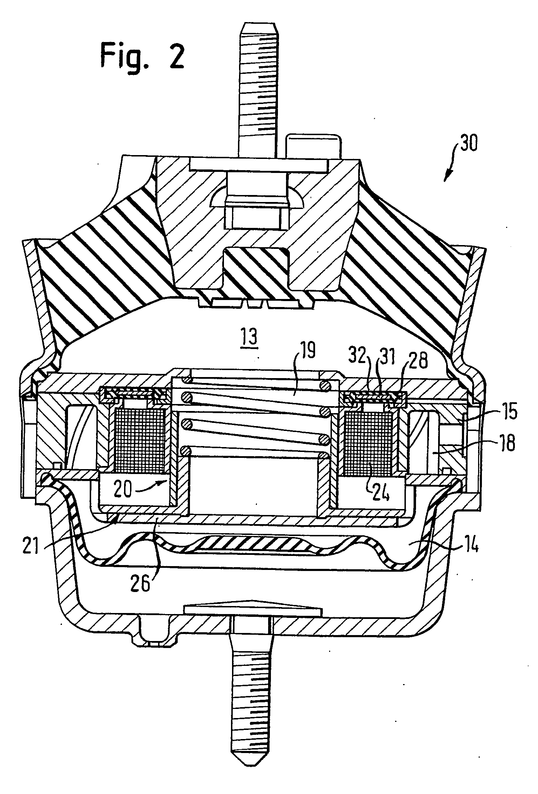

Das in Figur 2 dargestellte hydraulisch dämpfende Lager 30, zu dessen nachfolgender Beschreibung die eingeführten Bezugszeichen für gleiche oder funktionsgleiche Teile verwendet werden, zeichnet sich durch einen prinzipiell ähnlichen Aufbau wie das Lager 10 gemäß Figur 1 aus.

Das Lager 30 besitzt eine Arbeitskammer 13 und eine Ausgleichskammer 14, die durch eine Zwischenplatte 15 voneinander getrennt sind. Die Arbeitskammer 13 und die Ausgleichskammer 14 sind durch einen Überströmkanal 18 und einen Bypaßkanal 19 miteinander verbunden. Im Bypaßkanal 19 ist ein steuerbares Stellglied 20 zugeordnet, das mit einer in der Ausgleichskammer angeordneten Prallplatte 26 zusammenwirkt.

Das Stellglied 20 weist einen Anker 21 auf, der mit einer in der Zwischenplatte 15 angeordneten elektromagnetischen Spule 24 zusammenwirkt. In der Zwischenplatte 15 ist ein Käfig 32 ausgebildet, in dem eine ringförmige Entkopplungsmembran 28 aus einem elastomeren Material aufgenommen ist. Die Entkopplungsmembran 28 weist ein Einlegeteil 31 aus einem magnetisierbarem Material, beispielsweise Metall, auf. Das Einlegeteil 31 wirkt mit der Spule 24 zusammen, wodurch der Freiweg der Entkopplungsmembran 28 steuerbar ist.

Bei Ansteuerung der Spule 24 wird somit einerseits der Bypaßkanal 19 freigegeben und andererseits die Entkopplungsfunktion der Entkopplungsmembran 28 abgeschaltet. Diese Schaltposition wird im Leerlaufbetrieb eingenommen. Hierdurch wird bei geringer Steifigkeit eine maximale Pumpwirkung des Lagers 30 erzielt. Demgegenüber ist im Fahrbetrieb der Bypaßkanal 19 geschlossen und die Entkopplungsmembran 28 freigegeben.

### Bezugszeichenliste

- 10 =: Lager
- 11 =: Tragfeder
- 12 =: Lagerkern
- 13 =: Arbeitskammer
- 14 =: Ausgleichskammer
- 15 =: Zwischenplatte
- 16 =: Ausgleichskappe
- 17 =: Lagergehäuse
- 18 =: Überströmkanal
- 19 =: Bypaßkanal

- 20 =: Stellglied
- 21 =: Anker
- 22 =: Gleithülse
- 23 =: Rückstellfeder
- 24 =: elektromagnetische Spule
- 25 =: Joch
- 26 =: Prallplatte
- 27 =: Steg
- 28 =: Entkopplungsmembran

- 30 =: Lager
- 31 =: Einlegteil
- 32 =: Käfig

## Patentansprüche

1. Hydraulisch dämpfendes Lager mit einer Arbeitskammer (13) und einer Ausgleichskammer (14), die mit einer hydraulisch dämpfendes Flüssigkeit gefüllt und durch eine Zwischenplatte (15) voneinander getrennt sind, wobei die Arbeitskammer (13) und die Ausgleichskammer (14) durch einen Überströmkanal (18) und einen Bypaßkanal (19) miteinander verbunden sind, der durch ein elektromagnetisch in Axialrichtung betätigbares Stellglied (20) freigebbar und verschließbar ist, **dadurch gekennzeichnet, daß** das Stellglied (20) als hohlzylinderförmige Schiebehülse ausgebildet ist, die den Bypaßkanal (19) begrenzt und an ihrer Außenseite einen radial abragenden, in der Ausgleichskammer (14) aufgenommenen Anker (21) aufweist, der einerseits mit einer in der Zwischenplatte (15) aufgenommen elektromagnetischen Spule (24) und andererseits mit einer den Bypaßkanal (19) freigebenden oder verschließenden Prallplatte (26) zusammenwirkt.

2. Lager nach Anspruch 1, **dadurch gekennzeichnet, daß** dem Steilglied (20) eine Rückstellfeder (23) zugeordnet ist.

3. Lager nach Anspruch 2, **dadurch gekennzeichnet, daß** die Rückstellfeder (23) spiralförmig ausgebildet ist und am Innenumfang des Stellglieds festgelegt ist.

4. Lager nach einem der Ansprüche 1 bis 3, **dadurch gekennzeichnet, daß** der Anker (21) des Stellglieds (20) einen Steuerkonus (21b) aufweist.

5. Lager nach einem der Ansprüche 1 bis 4, **dadurch gekennzeichnet, daß** das Stellglied (20) eine hohlzylinderförmige Gleithülse (22) aus einem nicht magnetisierbarem Material, vorzugsweise aus Kunststoff, aufweist.

6. Lager nach einem der Ansprüche 1 bis 5, **dadurch gekennzeichnet, daß** die Prallplatte (26) in Umfangsrichtung versetzt angeordnete Stege (27) aufweist, die an der Zwischenplatte (15) festgelegt sind.

7. Lager nach einem der Ansprüche 1 bis 6, **dadurch gekennzeichnet, daß** in der Zwischenplatte (15) eine Entkopplungsmembran (28) angeordnet ist, die von der hydraulischen Flüssigkeit der Arbeitskammer (13) beaufschlagt ist.

8. Lager nach einem der Ansprüche 1 bis 7, **dadurch gekennzeichnet, daß** in der Zwischenplatte eine Entkopplungsmembran (28) angeordnet ist, deren Freiweg durch die elektromagnetische Spule (24) steuerbar ist.

9. Hydrolager nach Anspruch 8, **dadurch gekennzeichnet, daß** die Entkopplungsmembran (28) aus einem elastomeren Material besteht und ein Einlegteil (31) aus einem magnetisierbarem Material aufweist.

10. Hydrolager nach einem der Ansprüche 7 bis 9, **dadurch gekennzeichnet, daß** die Entkopplungsmembran (28) ringförmig ausgebildet ist.

## Claims

1. A hydraulic damping mount comprising a working chamber (13) and a compensation chamber (14) filled with a hydraulic fluid and separated from each other by a partition plate (15), the working chamber (13) and the compensation chamber (14) being connected with each other through an overflow channel (18) and a bypass channel (19), the latter being opened and closed by an electromagnetic axially activatable actuator (20), **characterized in that** the actuator (20) being configured as a tubular sliding sleeve which defines the bypass channel (19) and contains at its outer side a radially protruding armature (21) accommodated in the compensation chamber (14) and which cooperates, on the one hand, with an electromagnetic solenoid (24) mounted in the partition plate (15) and, on the other, with a flapper (26) opening and closing the bypass channel (19).

2. The mount as set forth in claim 1, **characterized in that** a return spring (23) is assigned to the actuator (20).

3. The mount as set forth in claim 2, **characterized in that** the return spring (23) is configured helical and defined by an inner circumference of the actuator (20).

4. The mount as set forth in any of the claims 1 to 3, **characterized in that** the armature (21) of the actuator (20) comprises a control cone (21 b).

5. The mount as set forth in any of the claims 1 to 4, **characterized in that** the actuator (20) comprises a tubular sliding sleeve (22) made of a non-magnetic material, preferably a plastics material.

6. The mount as set forth in any of the claims 1 to 5, **characterized in that** the flapper (26) has a staggered circumferential configuration of ridges (27) defined at the partition plate (15).

7. The mount as set forth in any of the claims 1 to 6, **characterized in that** disposed in the partition plate (15) is a decoupler diaphragm (28) receiving a force transmitted by the hydraulic fluid in the working chamber (13).

8. The mount as set forth in any of the claims 1 to 7, **characterized in that** disposed in the partition plate (15) is a decoupler diaphragm (28) the excursion of which is controlled by the electromagnetic solenoid (24).

9. The mount as set forth in claim 8, **characterized in that** the decoupler diaphragm (28) is made of an elastomer and has an insert (31) formed of a magnetizable material.

10. The mount as set forth in any of the claims 7 to 9, **characterized in that** the decoupler diaphragm (28) is configured annularly.

## Revendications

1. Palier à amortissement hydraulique, comprenant une chambre de travail (13) et une chambre de compensation (14), qui sont remplies avec un liquide d'amortissement hydraulique et qui sont séparées l'une de l'autre par une plaque intermédiaire (15), ladite chambre de travail (13) et ladite chambre de compensation (14) étant reliées l'une à l'autre par un canal de déversement (18) et par un canal de by-pass (19), lequel peut être libéré et obturé par un organe de positionnement (20) susceptible d'être actionné en direction axiale par voie électromagnétique, **caractérisé en ce que** l'organe de positionnement (20) est réalisé sous forme de douille-tiroir en forme de cylindre creux, qui délimite le canal de by-pass (19) et qui comporte à sa face extérieure un induit (21) en dépassement radial et reçu dans la chambre de compensation (14), lequel coopère d'une part avec une bobine électromagnétique (24) reçue dans la plaque intermédiaire (15) et d'autre part avec une plaque à impact (26) qui libère ou qui obture le canal de by-pass (19).

2. Palier selon la revendication 1, **caractérisé en ce qu'**un ressort de rappel (23) est associé à l'organe de positionnement (20).

3. Palier selon la revendication 2, **caractérisé en ce que** le ressort de rappel (23) est réalisé en forme spiralée et immobilisé à la périphérie intérieure de l'organe de positionnement.

4. Palier selon l'une des revendications 1 à 3, **caractérisé en ce que** l'induit (21) de l'organe de positionnement (20) comprend un cône de commande (21 b).

5. Palier selon l'une des revendications 1 à 4, **caractérisé en ce que** l'organe de positionnement (20) comprend une douille coulissante (22) en forme de cylindre creux en un matériau non magnétique, de préférence en matière plastique.

6. Palier selon l'une des revendications 1 à 5, **caractérisé en ce que** la plaque à impact (26) comporte des barrettes (27) agencées en décalage en direction périphérique, qui sont stipulées sur la plaque intermédiaire (15).

7. Palier selon l'une des revendications 1 à 6, **caractérisé en ce qu'**une membrane de découplage (28) est agencée dans la plaque intermédiaire (15), qui est attaquée par le liquide hydraulique de la chambre de travail (13).

8. Palier selon l'une des revendications 1 à 7, **caractérisé en ce qu'**une membrane de découplage (28) est agencée dans la plaque intermédiaire, dont la course libre peut être commandée par la bobine électromagnétique (24).

9. Palier hydraulique selon la revendication 8, **caractérisé en ce que** la membrane de découplage (28) est en un matériau élastomère et comprend une partie d'insert (31) en matériau magnétique.

10. Palier hydraulique selon l'une des revendications 7 à 9, **caractérisé en ce que** la membrane de découplage (28) est réalisée sous forme annulaire.
